# EUROPEAN PATENT APPLICATION

(11) **EP 4 752 124 A1**
(43) Date of publication of application: **03.06.2026**
(21) Application number: 24216961.3
(22) Date of filing: 02.12.2024
(51) Int. Cl.: C06B 21/00, B33Y 70/10, C06B 45/10, C08L 101/00

(54) **3D-PRINTABLE ENERGETIC RESIN**

(71) Applicant: EURENCO Clermont, 4480 Engis (BE)
(72) Inventor: DEJEAIFVE, Alain, 4480 Engis (BE); DOBSON, Rowan, 4480 Engis (BE)
(74) Representative: Cabinet Beau de Loménie

(57) **Abstract**

The present disclosure relates to a 3D-printing photosensitive energetic resin capable of forming three-dimensional objects by stereolithography 3D-printing. The resin includes a dendritic polymer of formula (I) as defined in the description, a diluent, a photo-initiator, and optionally one or more additives and/or one or more energetic charges.

## Description

### Background of the invention

Solid propellants are used in pyrotechnics and ballistics applications to literally propel a projectile, most commonly out of a tube.

Typical propellants consist mainly of nitrocellulose, which can be complemented by nitroglycerine for increased performance levels. Such propellants are produced either by extrusion processes or by the Olin process for spherical propellants. Additional (energetic) compounds are used to achieve specific properties such as reduced barrel erosion, reduced copper deposition or reduced muzzle-flash signature.

The propellant charge must burn in a controlled manner and therefore possess a form function designed to generate gases according to an optimised profile (i.e. compensating the expansion created with the motion of the projectile) in order to maximise the conversion of chemical energy to kinetic energy and providing a maximised velocity projectile.

The specific gas generation profile can be controlled by several factors, such as the chemical composition and the geometry of the propellant, acting on the linear burn-rate and the web thickness, respectively.

Piobert's law applies to the reaction of solid propellant grains to generate hot gas. Burning takes place in parallel layers whereby the surface of the grain regresses, layer by layer, perpendicular to the surface at every point. The gas generation profile of a solid propellant is therefore proportional to the available surface for the combustion.

Several geometries have been extensively used in the field of solid propellants to generate progressive gas generation profiles, however the achievable geometries are as versatile as their manufacturing processes, and are often limited to spherical (degressive), tubular (neutral) or multi-perforated (slightly progressive).

Optimised geometries are being studied, however the manufacturing is often rendered impossible using conventional processes, materials, and manufacturing methods.

Optimised geometries, however, could better regulate the burning phase of the solid propellant and could prolong the so-called pressure "plateau" sought by ballisticians.

3D-printable energetic formulations have been explored, and often come with several disadvantages such as poor resolution, the lack of energy and performance... Curable formulations using an inert and an energetic component (e.g. RDX, HMX, CL-20...) have been proposed, however they often require large amounts of diluents to provide reasonable curing efficiencies. An additional energetic plasticiser can be used, however the amounts should be limited due to its non-participation in the curing process. The relatively high viscosity of such formulation is furthermore often an issue for 3D-printing.

There is therefore a need to overcome the disadvantages mentioned above, in particular to provide energetic formulations the viscosity of which is suitable for 3D-printing. It is to the inventors' credit to have found that dendritic polymers offer a good energetic content and reactive functional groups able to polymerise further when used in 3D-printing machines such as stereolithography machines. Moreover, the degree of freedom offered by the dendritic structure not only allows the energetic contents to be fine-tuned, but also allows the viscosity of the resin to be adjusted by controlling the size of the dendrimer, rendering the necessity of a diluent minimal.

### Summary of the invention

In one aspect, the present disclosure relates to a curable resin composition comprising, based on the total weight of the composition:
(a) about 60.0% to about 90.0% either of at least one dendritic polymer of formula (I) or of a mixture of at least one dendritic polymer of formula (I) with at least one dendritic polymer of formula (I') in a weight ratio of about 10/90 to about 90/10: 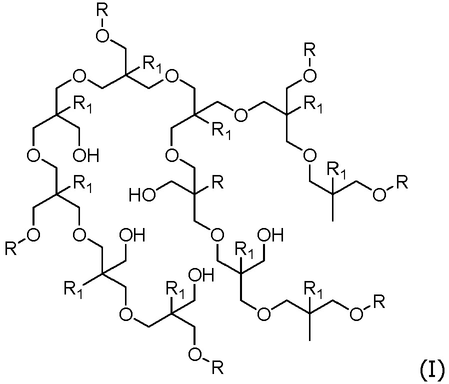 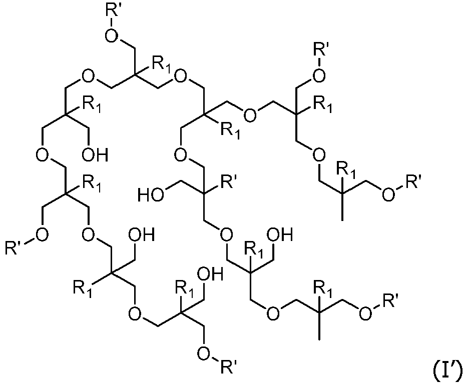 wherein:
   - each R is independently a group of formula (II): 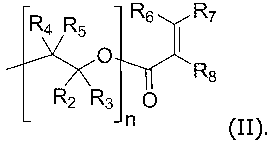
   - each R' is independently a group of formula (III): 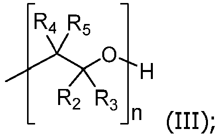
   - R₂ to R₅ are each independently -(CH₂)ₘN₃, -(CH₂)ₘONO₂, -(CH₂)ₘNO₂ , or -(CH₂)ₘNR₉NO₂;
   - R₆, R₇ and R₈ are each independently H or an alkyl group;
   - R₉ is H, NO₂ or an alkyl group;
   - each R₁ is independently H or an alkyl group;
   - m is 0, 1 or 2; and
   - each n is in the range of 10 to 250;
(b) about 0.1% to about 5.0% of a photoinitiator;
(c) 0% to about 30.0% of a diluent;
(d) 0% to about 5.0% of at least one additive;
(e) 0% to about 20.0% of at least one energetic charge;
wherein the sum of (a), (b), (c), (d) and (e) is equal to 100%.

In one aspect, the present disclosure relates to a cured resin obtainable from the curable resin composition as defined herein.

In one aspect, the present disclosure relates to a solid propellant comprising a cured resin as defined herein.

### Description of the figures

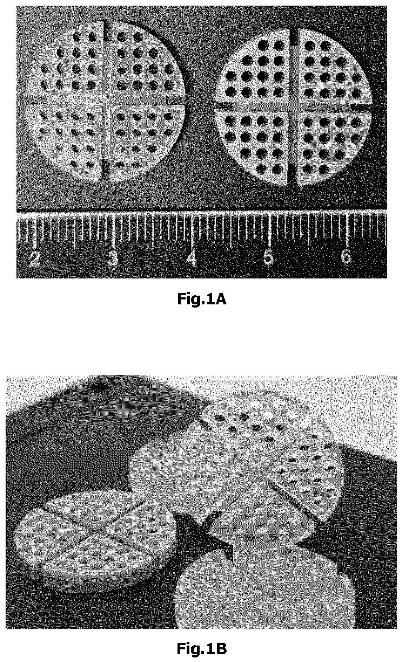

Figures 1A and 1B show 3D-printed materials obtained from a curable resin composition of the invention and from a commercial resin not comprising any energetic groups and not based on a dendritic polymer. Fig.1A: left = invention, right = control. Fig.1B: left = control, right = invention.

### Description of the invention

In the context of the present disclosure, the expressions "at least one" and "one or more" are interchangeable, and include the values 1, 2, 3, 4, 5, 6, 7, 8, 9 and 10, preferably the values 1, 2, 3, 4 and 5. All embodiments described herein can be combined. An "alkyl", as used herein, is an aliphatic linear or branched hydrocarbon chain having from 1 to 6, preferably from 1 to 4, carbon atoms.

In one aspect, the present disclosure relates to a curable resin composition comprising, based on the total weight of the composition:
(a) about 60.0% to about 90.0% either of at least one dendritic polymer of formula (I) or of a mixture of at least one dendritic polymer of formula (I) with at least one dendritic polymer of formula (I') in a weight ratio of about 10/90 to about 90/10: 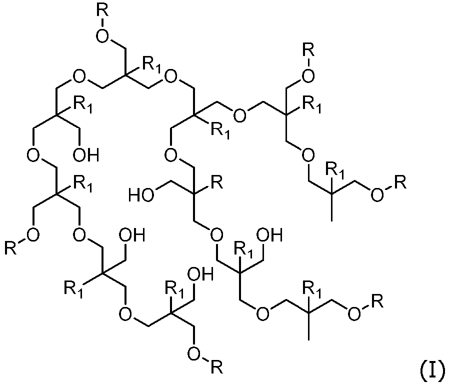 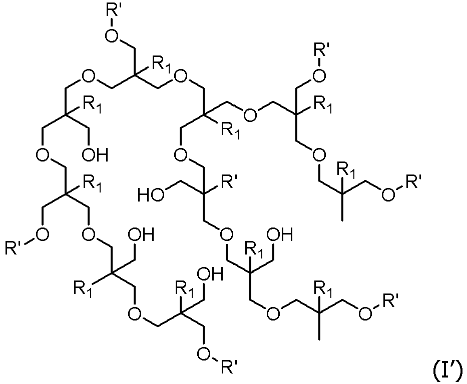 wherein:
   - each R is independently a group of formula (II): 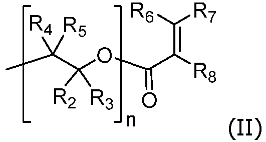
   - each R' is independently a group of formula (III): 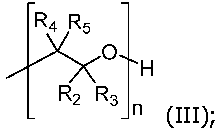
   - R₂ to R₅ are each independently -(CH₂)ₘN₃, -(CH₂)ₘONO₂, -(CH₂)ₘNO₂ or -(CH₂)ₘNR₉NO₂;
   - R₆, R₇ and R₈ are each independently H or an alkyl group;
   - R₉ is H, NO₂ or an alkyl group;
   - each R₁ is independently H or an alkyl group;
   - m is 0, 1 or 2; and
   - each n is the range of 10 to 250;
(b) about 0.1% to about 5.0% of a photoinitiator;
(c) 0% to about 30.0% of a diluent;
(d) 0% to about 5.0% of at least one additive;
(e) 0% to about 20.0% of at least one energetic charge;
wherein the sum of (a), (b), (c), (d) and (e) is equal to 100%.

In some embodiments, m is 0. In some embodiments, m is 1. In some embodiments, m is 2.

In some embodiments, n is in the range of 10 to 240, 10 to 230, 10 to 220, 10 to 210, 10 to 200, 10 to 190, 10 to 180, 10 to 170, 10 to 160, 10 to 150, 10 to 140, 10 to 130, 10 to 120, 10 to 110, 10 to 100, 10 to 90, 10 to 80, 10 to 70, 10 to 60 or 10 to 50.

The curable resin composition described herein comprises about 60% to about 90% by weight, based on the total weight of the composition, either of one or more dendritic polymer(s) of formula (I), or of a mixture of one or more dendritic polymer(s) of formula (I) with one or more dendritic polymer(s) of formula (I'). In some embodiments, component (a) consists of one or more dendritic polymer(s) of formula (I). In some embodiments, component (a) consists of a mixture of one or more dendritic polymer(s) of formula (I) with one or more dendritic polymer(s) of formula (I').

In embodiments where component (a) consists of a mixture of one or more dendritic polymer(s) of formula (I) with one or more dendritic polymer(s) of formula (I'), the weight ratio of the dendritic polymer(s) of formula (I) to the dendritic polymer(s) of formula (I') is in the range from about 10/90 to about 90/10, such as for example in the range from about 15/85 to about 85/15, from about 20/80 to about 80/20, from about 25/75 to about 75/25, from about 30/70 to about 70/30, from about 35/65 to about 65/35, from about 40/60 to about 60/40, or from about 45/55 to about 55/45.

In some embodiments, the curable resin composition comprises about 65% to about 85% by weight, about 70% to about 85% by weight, or about 75% to about 85% by weight, of component (a).

The curable resin composition described herein also comprises about 0.1% to about 5.0% by weight of a photoinitiator. In some embodiments, the curable resin composition comprises about 0.25% to about 3% by weight, or about 0.75% to 1.5% by weight, of a photoinitiator. In some embodiments, the photoinitiator is an oxide, such as for example BAPO (Bis(acyl)phospine oxide), TPO (Diphenyl(2,4,6-trimethylbenzoyl)phosphine oxide) or DMPO (5,5'-dimethyl-1-pyrroline N-oxide).

The curable resin composition described herein may comprise up to about 30% by weight of a diluent. In some embodiments, the curable resin composition comprises about 5% by weight to about 15% by weight, or about 5% by weight to about 10% by weight of a diluent. The diluent can be of any type typically used in photopolymerisable resins such as (meth)acrylates or unsaturated compounds. Examples of such compounds include HDD (1,6-Hexanediol diacrylate), HEA (2-hydroxyethyl acrylate), DEGDA (Diethylene glycol diacrylate) and TMPTA (Trimethylolpropane triacrylate), or a mixture thereof.

The curable resin composition described herein may also comprise up to about 5.0% by weight of one or more additives. In some embodiments the curable resin composition comprises about 0.05% by weight to about 3.0% by weight, or about 0.1% to about 2.0% by weight, of one or more additives. Suitable additives for implementation in the curable resin composition include UV-blockers, such as 2,5-bis(5-tert-butyl-benzoxazol-2-yl)thiophene (CAS # 7128-64-5), and stabilisers, for example HALS (Hindered Amine Light Stabilisers), such as TEMPO ((2,2,6,6-tetramethylpiperidin-1-yl)oxy), tocopherols and tocotrienols, curcumin, or else aromatic type stabilisers, such as MeHQ (4-methoxyphenol).

The curable resin composition described herein may also comprise up to about 20.0% by weight of one or more energetic charges. In some embodiments, the curable resin composition comprises about 1.0% by weight to about 15.0% by weight, or about 3.0% by weight to about 10% by weight of one or more energetic charges. Examples of energetic charges include trinitrotoluene (TNT), hexogen (RDX), octogen (HMX), hexanitrohexaazaisowurtzitane (CL20), nitroguanidine (NGU), nitroglycerine (NGL), ethylene dinitramine (EDNA), ethylene glycol dinitrate (EGDN), N-guanylurea dinitramide (FOX 12 (GUDN)), 1,1-diamino-2,2-dinitroethylene (FOX 7 (DADE)), bis(triaminoguanidinium) 5,5'-azotetrazolate (TAGZT), dihydrazinium 5,5' azotetrazolate (DHDZT), 5,5'-bis(tetrazolyl)hydrazine (HBT), bis(2,2-dinitropropyl)nitramine (BDNPN), 3,4,5-trinitropyrazole (3,4,5-TNP) and dihydroxylammonium 5-5'-bistetrazole-1,1'-diolate (TKX-50). In some embodiments, the energetic charge or the mixture of energetic charges has a good oxygen balance, e.g. an oxygen balance close to 0).

In one aspect the present disclosure relates to a cured resin obtainable from the curable resin composition as defined herein. Curing of the resin composition typically occurs upon UV-activation of the photoinitiator within a 3D printer.

In one aspect, the present disclosure relates to a solid propellant comprising a cured resin as defined herein.

The dendritic polymers of formula (I) can be prepared as described below. As shown in scheme 1, the core of the polymer is prepared starting from an oxetane-type compound. For example, 2 equivalents of 3-Ethyl-3-oxetanemethanol (EOM) diluted in dichloroethane (approximately 850 mL/mole EOM) are added dropwise, at room temperature, to 1 equivalent of boron trifluoride etherate in a dried chlorinated solvent such as dichloroethane. The mixture is allowed to react for about 36 hours to obtain the product that will subsequently be used as such to grow the side-arms of the dendrimer.

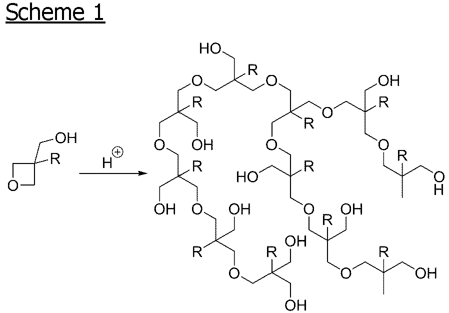

As shown in scheme 2, the core thus obtained is then subsequently reacted by cationic polymerisation with an inert oxirane (such as epichlorohydrin, R₂=-CH₂Cl; R₃=R₄=R₅=H) to grow n-generation "arms" bearing a substitutable functional group (i.e. chloride) able to subsequently react by nucleophilic substitution with a group capable of providing the energy to the polymer, for example sodium azide. For example, the oxirane is added, in a "one-pot" fashion, to the product obtained as described above, at -5°C. The amount of oxirane is directly proportional to the desired length of the side-chains, and influences the properties of the final molecules in terms of viscosity and energy. A ratio from 8 to 12 is typically used to obtain a good balance between those properties.

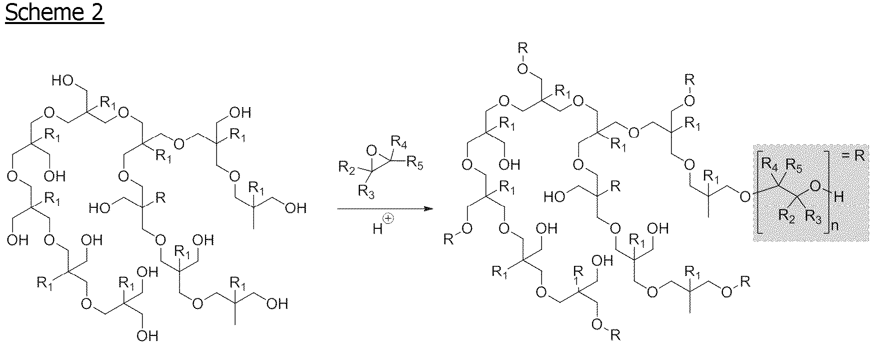

As shown in scheme 3, the "arms" of the polymer are subsequently generated using an energetic oxirane or oxetane bearing at least an energetic functional group, such as an azide, a nitro or a nitrate. The use of the energetic monomer allows the reduction of the sequence by 1 step, providing directly the energetic dendrimer. For example, 10 equivalents of glycidyl nitrate, diluted in a chlorinated solvent, are added in a drop-wise fashion to the product obtained following scheme 2, at -5°C. The mixture is subsequently allowed to react for about 24 hours before being quenched with the addition of a few drops of water. The solvent is removed under vacuum and the resulting polymer is washed with water to remove impurities, solubilised in ethanol and re-precipitated in cold water. A viscous product is recovered after drying the precipitate under vacuum for several hours at 65°C. 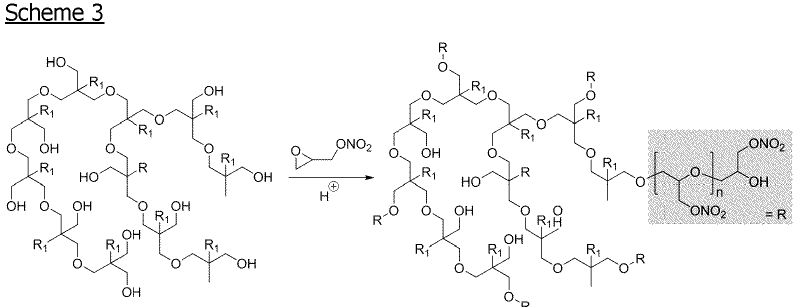 It will be appreciated that, in the above scheme, glycidyl nitrate can be replaced with any of the following oxiranes:

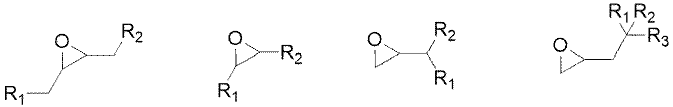

As shown in scheme 4, the hydroxyl end groups of the compound obtained following scheme 3 are then functionalised with a photosensitive chemical group, such as an acrylate or a methacrylate group. This functionalisation renders possible the use of the dendritic polymer as a UV-curable material and the nature of the acrylate modulates the reactivity of the resin. For example, an excess of triethylamine (1.1 eq) is added to a solution of the nitrated dendrimer (1 eq) solubilised in a chlorinated solvent such as dichloromethane, at 0°C. After the deprotonation of the hydroxyl group, an excess of acryloyl chloride (e.g., from about 1.1 eq to about 10 eq) is subsequently added dropwise, and the mixture is allowed to react at room temperature for about 12 hours. The salts are removed by filtration and the mixture is washed with water and a saturated solution of sodium bicarbonate. The aqueous phase is extracted with dichloromethane and the combined organic phases are dried over magnesium sulfate and then evaporated under vacuum to recover the end dendritic polymer in the form of a viscous liquid. 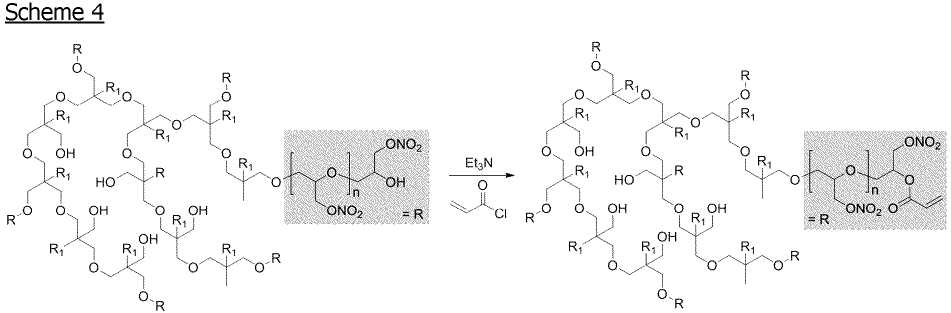 It will be appreciated that the functionalisation of the hydroxyl groups in the starting dendrimer can be controlled by varying the amount of acryloyl chloride used. Hence in some embodiments, dendritic polymers of formula (I) can be obtained where at least one group R is replaced by a group R', R and R' being as defined above - it being understood that compounds (I) still bear a majority of groups R.

The energy content of the compositions of the invention is on par with that of conventional nitrocellulose-based propellants, without the mandatory addition of high-explosives or oxidisers. The addition of an additional filler, however, is still possible to further enhance the combustion properties or energy level of the final product.

The resulting resin can be used in conventional UV-curing 3D-printing machines to produce a wide range of solid propellants, with unique shapes and optimised combustion profiles that are unattainable by conventional production processes.

## Claims

1. A curable resin composition comprising, based on the total weight of the composition:
(a) about 60.0% to about 90.0% either of one or more dendritic polymer(s) of formula (I) or of a mixture of at least one dendritic polymer of formula (I) with at least one dendritic polymer of formula (I') in a weight ratio of about 10/90 to about 90/10: 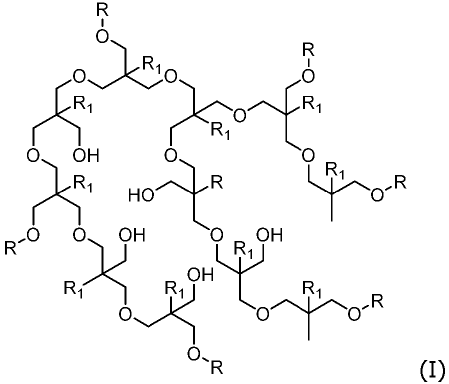 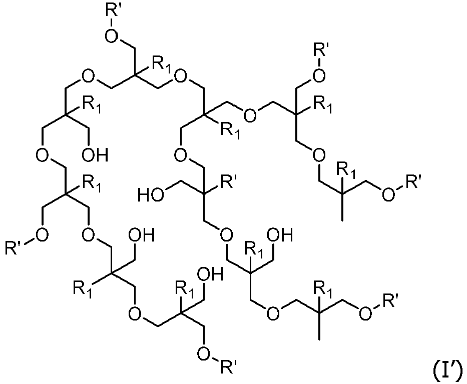 wherein:
- each R is independently a group of formula (II): 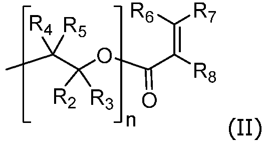
- each R' is independently a group of formula (III): 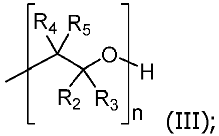
- R₂ to R₅ are each independently -(CH₂)ₘN₃, -(CH₂)ₘONO₂, -(CH₂)ₘNO₂ or -(CH₂)ₘNR₉NO₂;
- R₆, R₇ and R₈ are each independently H or an alkyl group;
- R₉ is H, NO₂ or an alkyl group;
- each R₁ is independently H or an alkyl group;
- m is 0, 1 or 2; and
- each n is in the range of 10 to 250;
(b) about 0.1% to about 5.0% of a photoinitiator;
(c) 0% to about 30.0% of a diluent;
(d) 0% to about 5.0% of at least one additive;
(e) 0% to about 20% of at least one energetic charge;
and wherein the sum of (a), (b), (c), (d) and (e) is equal to 100%.

2. The curable resin composition of claim 1, comprising about 65% to about 85% of component (a).

3. The curable resin composition of claim 1 or claim 2, wherein component (a) consists of one or more dendritic polymer(s) of formula (I).

4. The curable resin composition of claim 1 or 2, wherein component (a) consists of a mixture of at least one dendritic polymer of formula (I) with at least one dendritic polymer of formula (I') in a weight ratio of about 10/90 to about 90/10.

5. The curable resin composition of any preceding claim, comprising about 0.25% to about 3% by weight, preferably about 0.75% to 1.5% by weight, of a photoinitiator.

6. The curable composition of any preceding claim, comprising about 5% by weight to about 15% by weight, preferably about 5% by weight to about 10% by weight, of a diluent.

7. The curable composition of any preceding claim, comprising about 0.05% by weight to about 3.0% by weight, preferably about 0.1% to about 2.0% by weight, of one or more additives.

8. The curable composition of any preceding claim, comprising about 1.0% by weight to about 15.0% by weight, or about 3.0% by weight to about 10% by weight, of one or more energetic charges.

9. A cured resin obtainable from the curable resin composition of any preceding claim.

10. A solid propellant comprising a cured resin of claim 9.
